(19) Europäisches Patentamt
European Patent Office
Office européen des brevets

(11) **EP 3 592 791 B1**

(12) **EUROPÄISCHE PATENTSCHRIFT**

(45) Veröffentlichungstag und Bekanntmachung des Hinweises auf die Patenterteilung:
**17.08.2022  Patentblatt 2022/33**

(21) Anmeldenummer: **18707727.6**

(22) Anmeldetag: **05.03.2018**

(51) Internationale Patentklassifikation (IPC):
**C08G 18/48** (2006.01)   **B29C 44/10** (2006.01)
**C08G 18/66** (2006.01)   **C08G 18/76** (2006.01)
**C08J 9/12** (2006.01)   **C08J 9/14** (2006.01)
**C08G 18/32** (2006.01)

(52) Gemeinsame Patentklassifikation (CPC):
**C08G 18/4825; B29C 44/10; C08G 18/3206; C08G 18/4829; C08G 18/4841; C08G 18/6677; C08G 18/7664; C08J 9/0004; C08J 9/122; C08J 9/141; B29K 2075/00; B29K 2105/0005; B29K 2105/041; B29K 2105/045; B29K 2995/0063;**

(Forts.)

(86) Internationale Anmeldenummer:
**PCT/EP2018/055271**

(87) Internationale Veröffentlichungsnummer:
**WO 2018/162372 (13.09.2018 Gazette 2018/37)**

(54) **POLYURETHANSCHAUM UND VERFAHREN ZU SEINER HERSTELLUNG**

POLYURETHANE FOAM AND METHOD FOR ITS PRODUCTION

MOUSSE DE POLYURÉTHANE ET SON PROCÉDÉ DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.03.2017  EP 17159555**

(43) Veröffentlichungstag der Anmeldung:
**15.01.2020  Patentblatt 2020/03**

(73) Patentinhaber: **Covestro Intellectual Property GmbH & Co. KG**
**51373 Leverkusen (DE)**

(72) Erfinder:
• **HAHN, Christian**
  **51375 Leverkusen (DE)**
• **ALBERS, Reinhard**
  **51375 Leverkusen (DE)**
• **ANWAR, Ali-Kasim**
  **45141 Essen (DE)**
• **SCHORNSTEIN, Marcel**
  **41462 Neuss (DE)**
• **BAECKER, Michael**
  **41352 Korschenbroich (DE)**
• **HEINZ, Paul**
  **51375 Leverkusen (DE)**

(74) Vertreter: **Levpat**
**c/o Covestro AG**
**Gebäude 4825**
**51365 Leverkusen (DE)**

(56) Entgegenhaltungen:
**WO-A1-2011/054868        WO-A1-2015/109488**
**DE-A1-102011 050 013**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)
B29L 2031/7622; C08G 2101/00; C08G 2110/0025;
C08G 2110/0058; C08G 2330/50; C08J 2201/022;
C08J 2203/06; C08J 2203/08; C08J 2205/044;
C08J 2205/05; C08J 2205/10; C08J 2207/00;
C08J 2375/08

**Beschreibung**

Die vorliegende Erfindung betrifft ein Verfahren zur Herstellung eines harten offenzelligen Polyurethanschaums. Die Schaumstoffe können neben Urethangruppen (PUR) auch Isocyanuratgruppen (PIR) enthalten. In dieser Anmeldung werden mit der Bezeichnung PUR/PIR - Hartschaum bzw. PUR/PIR-Hartschaumstoff sowohl Hartschäume, welche im Wesentlichen Urethangruppen aufweisen, als auch Hartschäume enthaltend sowohl Urethan- als auch Isocyanuratgruppen gemeint, falls nicht anders angegeben.

PUR/PIR-Hartschäume sind seit langem bekannt. Ein wesentliches Einsatzgebiet ist die Temperaturisolierung. Dabei gewinnt die Anwendung von Vakuumisolationspaneelen (VIP) enthaltend PUR/PIR-Hartschäume zur Isolierung zunehmend an Bedeutung. Auf die Isolationseigenschaften von für die Vakuumisolation eingesetzten Schäumen hat die Schaumqualität entscheidenden Einfluss: zum einen sind eine möglichst kleine Zellgröße und möglichst homogene Zellgrößen vorteilhaft, zum anderen ist eine hoher Anteil an offenen Zellen günstig, um den Schaum gut evakuieren zu können.

EP 905 159 A sowie EP 905 158 A offenbaren Verfahren zur Herstellung von offenzelligen Polyurethan-Hartschaumstoffen, bei denen als Treibmittel bevorzugt Wasser in Kombination mit Kohlenwasserstoffen oder Fluorkohlenwasserstoffen eingesetzt wird. Die Polyolformulierungen sollen 0,1 - 80 Gew.-% an Polyesteralkoholen enthalten, bei denen es sich bevorzugt um Umsetzungsprodukte der Ricinolsäure und/oder des Rizinusöls und/oder der Tallölfettsäure mit mehrfunktionellen Alkoholen handelt. Diese Komponenten sollen als Emulgierhilfsmittel für nicht halogenhaltige Treibmittel wirken. Mit den beanspruchten Polyolen werden in den Beispielen sowohl offenzellige als auch geschlossenzellige Schäume hergestellt, wobei die Offenzelligkeit an die Anwesenheit von als Zellöffnern bekannten Additiven geknüpft ist. Die Zellen der erhaltenen Schaumstoffe werden zwar als feinzellig beschrieben, jedoch bedeutet "sehr feinzellig" gemäß Legende einen Zellgrößenbereich von 180 - 250 $\mu$m. Über die Homogenität der Zellgrößenverteilung wird zudem keine Aussage gemacht.

Bei der Herstellung von PUR/PIR-Hartschäumen wird eine Polyolkomponente, in welcher auch ein Treibmittel enthalten ist, mit einem Isocyanat zur Reaktion gebracht. Durch die Reaktion von Isocyanat mit Wasser entsteht Kohlenstoffdioxid, das auch als Treibmittel wirkt. Es ist auch bekannt, $CO_2$ als Treibmittel der Polyolkomponente oder der Reaktionsmischung zuzusetzen.

Die schlagartige Entspannung $CO_2$-haltiger Reaktionsmischungen wird in WO 2001/98389 A1 beschrieben. Diese Patentanmeldung betrifft ein Verfahren zur Herstellung von Polyurethan-Blockschaum, wobei eine Kohlenstoffdioxid enthaltende Polyurethan-Reaktivmischung plötzlich von einem Druck oberhalb des Gleichgewichtlösungsdruckes des Kohlenstoffdioxids auf Normaldruck entspannt wird. Die flüssige Polyurethan-Reaktivmischung wird unter Freisetzung von gelöstem Kohlenstoffdioxid aufgeschäumt, die aufgeschäumte Mischung wird auf ein Substrat aufgebracht und anschließend zum Blockschaum ausgehärtet. Das Kohlenstoffdioxid wird zunächst bei einem wesentlich oberhalb des Gleichgewichtlösungsdruckes liegenden Druck in der Reaktivmischung oder mindestens einer der Komponenten Polyol und Isocyanat vollständig gelöst. Anschließend wird der Druck auf einen Druck nahe des Gleichgewichtlösungsdruckes herabgesetzt, wobei zwischenzeitlich der Gleichgewichtlösungsdruck unter Freisetzung geringer Mengen des Kohlenstoffdioxid unter Bildung einer Blasen-Mikrodispersion unterschritten wird, gegebenenfalls die Komponenten gemischt werden und die plötzliche Druckherabsetzung auf Normaldruck erfolgt, bevor das freigesetzte Kohlenstoffdioxid wieder vollständig aufgelöst wird. Allerdings finden sich hier keine Hinweise auf nanozelluläre Schäume oder überkritische Bedingungen für das Treibmittel.

WO 2011/054868 A und WO 2011/054873 A offenbaren Herstellungsverfahren für feinzellige, Urethangruppenhaltige Schaumstoffe unter Verwendung von $CO_2$ als überkritischem Treibmittel. Entscheidend für den Erfolg des Verfahrens ist in beiden Fällen die Herstellung einer Mikroemulsion aus Polyolphase und überkritischem $CO_2$. Diese soll durch die Verwendung geeigneter Tensidkomponenten eingestellt werden. Es werden jedoch keine Angaben gemacht, wie mit diesem Verfahren Schäume mit überwiegend offenen Zellen hergestellt werden.

WO 2015/109488 A beschreibt ebenfalls ein Herstellungsverfahren von Urethangruppen-haltigen Schaumstoffen unter Verwendung von $CO_2$ als überkritischem Treibmittel. Bei dem Herstellverfahren handelt es sich um ein mehrstufiges Verfahren, wobei die Polyolkomponente zunächst mit $CO_2$ unter überkritischen Bedingungen gesättigt werden muss und anschließend auf die Reaktionsmischung mindestens Drücke von 100 bar einwirken müssen. Die hergestellten Schäume sollen kleine Zellgrößen und eine hohe Porosität aufweisen. Schäume mit einer hohen Offenzelligkeit werden jedoch nur bei Einsatz von Propylenoxid-basierten Polyethern und bei Verwendung von zwei ganz bestimmten zellöffnenden Tensiden in einem bestimmten Verhältnis gefunden. Das Verfahren liefert Schäume mit Dichten >> 100 kg/m³. Die gesamte Dauer für das mehrstufige Verfahren (Sättigen, Reagieren, Aushärten) im Reaktor beträgt >> 1 h, während der überkritische Bedingungen eingehalten werden müssen.

Ausgehend von dem vorliegenden Stand der Technik bestand daher die Aufgabe, eine Polyolformulierung für ein Reaktionsgemisch zur Verfügung zu stellen, mit dem sich ein sehr feinzelliger, offenzelliger Urethangruppen enthaltender Hartschaum (PUR/PIR-Hartschaum) in einem einfachen Verfahren für die Herstellung von sehr feinzelligen, Urethangruppen enthaltenden Hartschäumen mit einer hohen Offenzelligkeit herstellen lässt, welches die Nachteile des Stands der Technik überwindet. Eine möglichst hohe Offenzelligkeit kombiniert mit einer kleinen Zellgröße ist für bestimmte Anwendungen von Interesse, bei denen diese Schaumeigenschaft die Möglichkeit eröffnet, durch Anlegen von Unterdruck die Wärmeleitfähigkeit des Schaumes zu reduzieren.

Insbesondere sollen eine Polyolformulierung und ein Verfahren zur Verfügung gestellt werden, mit dem sich Polyurethan-Hartschäume, die eine Rohdichte von 30 - 90 kg/m$^3$ und eine Offenzelligkeit von > 90% aufweisen, und bei denen die Zellen einen durchschnittlichen Durchmesser von < 50 $\mu$m haben, herstellen stellen lassen.

Gegenstand der Offenbarung ist ein Verfahren zur Herstellung PUR/PIR-Hartschaumstoffen mit einer Rohdichte von 30 - 90 kg/m$^3$ gemäß ISO 845:2006, bevorzugt 30 - 70 kg/m$^3$, einer Offenzelligkeit von > 90% gemäß ISO 4590:2002, bevorzugt $\geq$ 94% und mit einem durchschnittlichen Zelldurchmesser von < 50 $\mu$m gemäß Lichtmikroskopischer Auswertung, umfassend die Schritte

i) Herstellen eines schaumbildenden Reaktionsgemisches R) enthaltend die Polyolformulierung P) enthaltend,

- eine Isocyanat-reaktive Komponente A) umfassend

mindestens eine Polyolkomponente A1) mit einer Funktionalität f von > 2,5, welche ausgewählt ist aus der Gruppe bestehend aus Polyetherpolyolen, Polyesterpolyolen, Polycarbonatpolyolen, Polyether-Polycarbonatpolyolen und Polyetheresterpolyolen,

eine Katalysatorkomponente D) mindestens enthaltend eine katalytisch aktive Verbindung D1), welche über Zerewitinoff-aktive Wasserstoffe verfügt,

- Hilfs- und Zusatzstoffe E) mindestens umfassend eine zellöffnende Verbindung,

wobei der Anteil aller in der Isocyanat-reaktiven Komponente A) vorhandenen primären OH - Funktionen an der Gesamtzahl der endständigen OH - Funktionen in der Komponente A) mindestens 30 % beträgt, eine Polyisocyanatkomponente B) und als Treibmittelkomponente C) $CO_2$ im überkritischen Zustand,

ii) Einbringen des schaumbildenden Reaktionsgemisches R) in eine Form,

iii) Aufschäumen lassen des Reaktionsgemisches R) und

iv) Entformen des PUR/PIR-Hartschaums.

Gegenstand der Erfindung ist das vorgehend beschriebene Verfahren, wobei Schritt i) sowie gegebenenfalls ii) unter überkritischen Bedingungen stattfindet,

und wobei Schritt i) in einem Mischkopf oder Hochdruckmischkopf erfolgt,

und wobei in Schritt ii) das schaumbildende Reaktionsgemisch R) aus Komponente A), Treibmittel C) und Polyisocyanatkomponente B) in eine geschlossene Form eingebracht wird, wobei der Gegendruck in der Form während des Einspritzens 2 - 90 bar beträgt.

In dieser Anmeldung verwendete Bezeichnungen haben die folgende Bedeutung:
Unter der Isocyanat-Kennzahl (auch Kennzahl oder Isocyanat-Index genannt) wird der Quotient aus der tatsächlich eingesetzten Stoffmenge [Mol] an Isocyanat-Gruppen und der tatsächlich eingesetzten Stoffmenge [Mol] an Isocyanat-reaktiven Gruppen, multipliziert mit 100, verstanden:

$$\text{Kennzahl} = (\text{Mole Isocyanat-Gruppen} / \text{Mole Isocyanat-reaktive Gruppen}) * 100$$

Mit "Funktionalität" oder "f" einer Komponentenmischung ist im Sinne dieser Anmeldung jeweils die zahlengemittelte Funktionalität der Mischung gemeint, auf die sich die Angabe bezieht. Mit Funktionalität der Polyol-Komponente A1) ist somit beispielsweise die zahlenmittlere Funktionalität der Mischung aus den in der Komponente A1 enthaltenen Polyolen in Bezug auf alle enthaltenen Isocyanat-reaktiven Funktionen gemeint.

Mit "Molgewicht" oder "Molmasse" bzw. "$M_n$" ist im Sinne dieser Anmeldung jeweils die zahlengewichtete mittlere Molmasse gemeint.

Die OH-Zahl (auch: Hydroxylzahl) gibt im Falle eines einzelnen zugesetzten Polyols dessen OH-Zahl an. Angaben der OH-Zahl für Mischungen beziehen sich auf die zahlenmittlere OH-Zahl der Mischung, berechnet aus den OH-Zahlen der einzelnen Komponenten in ihren jeweiligen molaren Anteilen. Die OH-Zahl gibt die Menge an Kaliumhydroxid in Milligramm an, welche der bei einer Acetylierung von einem Gramm Substanz gebundenen Menge Essigsäure gleichwertig ist. Sie wird im Rahmen der vorliegenden Erfindung bestimmt nach der Norm DIN 53240-2, Stand November 2007.

Die Isocyanat-reaktive Komponente A) enthält mindestens eine Polyolkomponente A1) ausgewählt aus der Gruppe bestehend aus Polyetherpolyolen, Polyesterpolyolen, Polyetheresterpolyolen, Polycarbonatpolyolen und Polyether-Polycarbonatpolyolen.

Der Anteil an primären OH - Funktionen an der Gesamtzahl der endständigen OH - Funktionen aller in der Komponente A) eingesetzten Polyole beträgt mindestens 30 %, bevorzugt mindestens 35 %, insbesondere bevorzugt mindestens 38 %.

Die Polyolkomponente A1) zeichnet sich weiterhin dadurch aus, dass sie eine Funktionalität f von > 2,5, bevorzugt $\geq$ 2,6 - $\leq$ 6,5 und besonders bevorzugt $\geq$ 2,8 - $\leq$ 6,1 aufweist. Mit Polyolformulierungen, in denen die Polyolkomponente A1) eine Funktionalität in diesen Bereichen aufweist, wird beim Einspritzen ein optimaler Viskositätsanstieg bis zur Entspannung des Gegendrucks gefunden und lassen sich die Schäume schneller entformen.

Die Polyolkomponente A1) weist bevorzugt eine Hydroxylzahl von 280 - 600 mg KOH/g, besonders bevorzugt von 300 - 580 mg KOH/g und insbesondere bevorzugt von 350 - 540 mg KOH/g auf. -Dies wirkt sich besonders günstig auf die mechanischen Eigenschaften der Schäume aus.

Im Sinne dieser Anmeldung kann es sich bei "einem Polyetherpolyol" auch um eine Mischung unterschiedlicher Polyetherpolyole handeln, analog gilt dies für die weiteren hier aufgeführten Polyole.

Bei den erfindungsgemäß verwendbaren Polyetherpolyolen handelt es sich um die dem Fachmann bekannten, in der Polyurethansynthese einsetzbaren Polyetherpolyole.

Verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxid und/oder Epichlorhydrin an di- oder polyfunktionelle Startermoleküle. Insbesondere bevorzugt ist die Addition von Ethylenoxid und Propylenoxid. Geeignete Startermoleküle sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, Bisphenole, insbesondere 4,4'-Methylenbisphenol, 4,4'-(1-Methylethyliden)bisphenol, 1,4-Butandiol, 1,6-Hexandiol sowie niedermolekulare, Hydroxylgruppen aufweisende Ester derartiger Polyole mit Dicarbonsäuren sowie Oligoether derartiger Polyole.

Bevorzugt enthält die Isocyanat-reaktive Komponente A) bezogen auf ihr Gesamtgewicht mindestens 50 Gew.-%, bevorzugt mindestens 60 Gew.-%, insbesondere bevorzugt mindestens 70 Gew.-% Polyetherpolyol. In einer bevorzugten Ausführungsform besteht die Komponente A1) zu 100 Gew.-% aus Polyetherpolyol. Diese bevorzugten Ausführungsformen zeichnen sich durch besonders gute Hydrolysestabilität aus.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit $\geq$ 4 bis $\leq$ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit $\geq$ 1 bis $\leq$ 4 Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl etc.) ist ebenfalls möglich und kann Vorteile aufweisen, z.B. im Hinblick auf Lagerstabilität der Polyolformulierung, Dimensionsstabilität, Brandverhalten und Druckfestigkeit der Schäume.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten.

Startermoleküle sind zum Beispiel Diole mit zahlenmittleren Molekulargewichten Mn von vorzugsweise $\geq$ 18 g/mol bis $\leq$ 400 g/mol, bevorzugt von $\geq$ 62 g/mol bis $\leq$ 200 g/mol wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol. Auch Startermoleküle mit von OH verschiedenen Funktionalitäten können alleine oder in Mischung eingesetzt werden.

Neben den Diolen können als Startermoleküle für die Herstellung der Polyether auch Verbindungen mit > 2 zerewitinoff-aktiven Wasserstoffen, besonders mit zahlenmittleren Funktionalitäten von > 2 bis ≤ 8, insbesondere von ≥ 3 bis ≤ 6 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molmassen Mn von vorzugsweise ≥ 62 g/mol bis ≤ 400 g/mol, insbesondere von ≥ 92 g/mol bis ≤ 200 g/mol.

Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

Geeignete Polyesterpolyole sind unter anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykole, weiterhin 1,2-Propandiol, 1,3-Propandiol, 1,3- und 1,4-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Es können zusätzlich auch einwertige Alkanole mit verwendet werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, oder Trimellithsäure eingesetzt werden. Als Säurequelle können auch die entsprechenden Anhydride verwendet werden.

Es können zusätzlich auch Monocarbonsäuren wie Benzoesäure und Alkancarbonsäuren mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, Hydroxyl-modifizierten Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren.

Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen, oder durch die Copolymerisation von Alkylenoxiden, wie zum Beispiel Propylenoxid, mit $CO_2$ erhältlich.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit $CO_2$ erhältlich sind.

Herstellungsverfahren der Polyole sind beispielsweise von Ionescu in "Chemistry and Technology of Polyols for Polyurethanes", Rapra Technology Limited, Shawbury 2005, S.55 ff. (Kap. 4: Oligo-Polyols for Elastic Polyurethanes), S. 263 ff. (Kap. 8: Polyester Polyols for Elastic Polyurethanes) und insbesondere auf S.321 ff. (Kap. 13: Polyether Polyols for Rigid Polyurethane Foams) und S.419 ff. (Kap. 16: Polyester Polyols for Rigid Polyurethane Foams) beschrieben worden. Es ist auch möglich, Polyester- und Polyetherpolyole über Glykolyse von geeigneten Polymer-Rezyklaten zu gewinnen. Geeignete Polyether-Polycarbonatpolyole und ihre Herstellung werden beispielsweise in der EP 2910585 A, [0024] - [0041], beschrieben. Beispiele zu Polycarbonatpolyolen und ihre Herstellung finden sich unter anderem in der EP 1359177 A. Die Herstellung geeigneter Polyetheresterpolyole ist unter anderem in der WO 2010/043624 A und in der EP 1 923 417 A beschrieben.

Polyetherpolyole, Polyethercarbonatpolyole und Polyetheresterpolyole mit einem hohen Anteil an primären OH-Funktionen werden erhalten, wenn die zur Alkoxylierung eingesetzten Alkylenoxide einen hohen Anteil an Ethylenoxid aufweisen. Insbesondere beträgt der molare Anteil an Ethylenoxidstrukturen, bezogen auf die Gesamtheit der in den Polyolen der Komponente A1 vorhandenen Alkylenoxidstrukturen, mindestens 50 mol-%. Der Einsatz von 100 mol % Ethylenoxid ist ebenfalls eine bevorzugte Ausführungsform.

Weiterhin können in der Isocyanat-reaktiven Komponente A) niedermolekulare Isocyanat-reaktive Verbindungen A2) enthalten sein, insbesondere können di- oder trifunktionelle Amine und Alkohole, besonders bevorzugt Diole und/oder Triole mit Molmassen $M_n$ kleiner als 400 g/mol, vorzugsweise von 60 bis 300 g/mol, zum Einsatz kommen, z.B. Triethanolamin, Diethylenglykol, Ethylenglykol, Glycerin. Sofern zur Herstellung der Polyurethanhartschaumstoffe solche niedermolekularen Isocyanat-reaktiven Verbindungen Anwendung finden, z.B. in der Funktion als Kettenverlängerungsmittel und/oder Vernetzungsmittel, und diese nicht auch unter die Definition der Komponente A1) fallen, kommen diese zweckmäßigerweise in einer Menge von bis zu 5 Gew.-%, bezogen auf das Gesamtgewicht der Komponente A) zum Einsatz.

Neben den oben beschriebenen Polyolen und Isocyanat-reaktiven Verbindungen können in der Komponente A) weitere Isocyanat-reaktive Verbindungen A3) enthalten sein, beispielsweise Graft-Polyole, Polyamine, Polyaminoalkohole und Polythiole. Selbstverständlich umfassen die beschriebenen Isocyanat-reaktiven Komponenten auch solche Verbindungen mit gemischten Funktionalitäten.

Eine bevorzugte Isocyanat-reaktive Komponente A) besteht zu mindestens 65 Gew.-%, insbesondere mindestens 80 Gew.-% und ganz besonders bevorzugt zu mehr als 90 Gew.-% aus der Polyolkomponente A1), die eine Hydroxylzahl zwischen 280 bis 600 mg KOH/g und eine Funktionalität von $\geq 2,8$ bis $\leq 6,0$ aufweist, und der Anteil an primären OH-Funktionen in der Komponente A) beträgt mindestens 35 % (bezogen auf alle endständigen OH-Funktionen in der Komponente A).

Die Polyolformulierung P) enthält Hilfs- und Zusatzstoffe E). Die Hilfs- und Zusatzstoffe umfassen mindestens eine oder mehrere zellöffnende Verbindungen. Zellöffnende Verbindungen sind beispielsweise im Kunststoff-Handbuch, Band 7, Polyurethane, Carl Hanser Verlag, München / Wien, 3. Auflage, 1993, Seiten 104-127 beschrieben. Es handelt sich beispielsweise um Silikone, wie Polyether-Polydimethylsiloxan-Copolymere, oder organische Polymere, z.B. solche auf Basis Polybutadien (z.B. Ortegol 500 und 501 von Evonik Industries), Tenside, wie z.B. das Natriumsalz von ethoxyliertem und sulfatisiertem Isotridecylalcohol, welches unter dem Handelsnamen Sermul EA266 (Elementis Specialties, Niederlande) erhältlich ist, sowie Mischungen unterschiedlicher Komponenten, z.B. Mischungen aus aminstabilisierten, makromolekularen, ungesättigten Kohlenwasserstoffen und Phthalsäureestern. Bevorzugt sind Zellöffner auf Basis Polybutadien. Bevorzugt werden die zellöffnenden Komponenten in Mengen von max. 1 Gew.-%, bezogen auf die Isocyanat-reaktive Komponente A), eingesetzt. Besonders bevorzugt ist der Einsatz von 0,1 - 1,0 Gew.-% eines organischen Polymers auf Basis Polybutadien, ganz besonders bevorzugt 0,25 - 0,75 Gew.-%, jeweils bezogen auf das Gesamtgewicht der Komponente A).

Weitere Hilfs- und Zusatzstoffe E), die in dem erfindungsgemäßen Verfahren eingesetzt werden können, sind die aus dem Stand der Technik und dem Fachmann bekannten und üblichen Hilfs und Zusatzstoffe. Genannt seien beispielsweise oberflächenaktive Substanzen, Stabilisatoren, insbesondere Schaumstabilisatoren, Zellregler, Füllstoffe, Farbstoffe, Pigmente, Flammschutzmittel, Antistatika, Hydrolyseschutzmittel und/oder fungistatisch und bakteriostatisch wirkende Substanzen.

Einige der bekannten zellöffnenden Verbindungen, z.B. die Silikone, können auch gleichzeitig Aufgaben als oberflächenaktive Substanzen, Stabilisatoren oder Zellregler übernehmen. In diesem Fall können von diesen Komponenten auch höhere als die oben für die zellöffnenden Verbindungen genannten, bevorzugten Mengen eingesetzt werden.

Es werden häufig Polyether-Polydimethylsiloxan-Copolymere verwendet, vorzugsweise ein Polyethylenoxid-Polyether mit Oligodimethylsiloxan-Endgruppen, wobei die Zahl der Dimethylsiloxan-Einheiten vorzugsweise $\leq 5$ ist.

Als Stabilisatoren können auch gesättige und ungesättigte Kohlenwasserstoffe wie Paraffine, Polybutadiene, Fettalkohole sowie Ester, z.B. Ester von Carbonsäuren, eingesetzt werden.

Die Komponente A) enthält bevorzugt insgesamt maximal 3 Gew.-% Silikone und Polybutadiene.

Weiterhin können als Stabilisatoren Tenside eingesetzt werden, beispielsweise alkoxylierte Alkanole wie Ether von linearen oder verzweigten Alkanolen mit $\geq 6$ bis $\leq 30$ Kohlenstoffatomen mit Polyalkylenglykolen mit $\geq 5$ bis $\leq 100$ Alkylenoxideinheiten, alkoxylierte Alkylphenole, alkoxylierte Fettsäuren, Carbonsäureester eines alkoxylierten Sorbitans (insbesondere Polysorbat 80), Fettsäureester, Polyalkylenamine, Alkylsulfate, Phosphatidylinositole, fluorierte Tenside, Polysiloxangruppen umfassende Tenside und/oder Bis(2-ethyl-1-hexyl)sulfosuccinat. Fluorierte Tenside können perfluoriert oder teilfluoriert sein. Beispiele hierfür sind teilfluorierte ethoxylierte Alkanole oder Carbonsäuren.

Bevorzugt enthält die Komponente A) insgesamt maximal 5 Gew.-% Tenside, insbesondere bevorzugt maximal 3 Gew.-%, mehr bevorzugt weniger als 2 Gew.-% und insbesondere bevorzugt maximal 1,6 Gew.-% an Tensiden, bezogen auf das Gesamtgewicht der Komponente A).

Für die Herstellung des PUR/PIR-Hartschaums werden Katalysatoren D) eingesetzt. Als Katalysatoren D) werden üblicherweise Verbindungen verwendet, welche die Reaktion der Hydroxylgruppen bzw. isocyanatreaktiven Gruppen enthaltenden Verbindungen der Komponenten mit den Isocyanatgruppen der Komponente B beschleunigen.

Die Katalysatoren D) enthalten D1) mindestens eine katalytisch aktive Aminverbindung mit funktionellen Gruppen, welche über Zerewitinoff-aktive Wasserstoffe verfügen und daher mit Isocyanat reagieren können (sogenannte "einbaubare Katalysatoren"). Beispiele für einsetzbare einbaubare Katalysatoren sind beispielsweise Bis-dimethylaminopropylharnstoff, Bis(N,N-Dimethylaminoethoxyethyl)carbamat, Di-methylamino-propylharnstoff, N,N,N-Trimethyl-N-hydroxyethylbis(aminopropylether), N,N,N-Trimethyl-N-hydroxyethylbis(aminoethylether), Diethylethanolamin, Bis(N,N-dimethyl-3-aminopropyl)amin, Dimethylaminopropylamin, 3-Di¬methyaminopropyl-N,N-dimethylpropan-1,3-diamin, Dimethyl-2-(2-amino¬ethoxyethanol) und (1,3-Bis(dimethylamino)-propan-2-ol), N,N-Bis-(3-dimethylamino-propyl)-N-isopropanolamin, Bis-(dimethylaminopropyl)-2-hydroxyethyl-amin, N,N,N-Trimethyl-N-(3aminopropyl)-bis(aminoethylether), 3-Dimethylaminoisopropyl-diisopropanolamin oder Mischungen davon.

In einer bevorzugten Ausführungsform werden die Katalysatoren D1) in einer Menge von $\geq$ 0,01 bis < 2 Gew.-%, bezogen auf das Gesamtgewicht der Komponente A) eingesetzt.

Daneben können eine oder mehrere weitere Katalysatorverbindung D2), insbesondere die für die PUR/PIR - Chemie bekannten katalytisch aktiven Verbindungen eingesetzt werden, neben weiteren Aminverbindungen auch Salze wie z.B. Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat, Dioctylzinndiacetat, Tris-(N,N-di-methylamino-propyl)-s-hexa¬hydro¬triazin, Tetramethylammoniumhydroxid, Natriumacetat, Natriumoctoat, Kaliumacetat, Kaliumoctoat, Natriumhydroxid.

Die Katalysatoren D) werden im Allgemeinen in einer Menge von 0,001 bis 5 Gew.-%, insbesondere von 0,05 bis 2,5 Gew.-% bezogen auf das Gewicht der Komponente A, eingesetzt. Besonders bevorzugt enthalten die Katalysatoren D) sowohl einbaubare Katalysatoren D1) und nicht einbaubare Katalysatoren D2). Insbesondere ist es bevorzugt, dass einbaubare Aminverbindungen und katalytisch aktive Salze in Kombination eingesetzt werden.

Die Katalysatoren D1 und D2 werden bevorzugt in einem molaren Verhältnis D1/D2 von 0,1 bis 16,3 eingesetzt, besonders bevorzugt von 0,3 bis 10 und ganz besonders bevorzugt von 0,8 bis 6,0. Die Katalysatorkomponente D) enthält bevorzugt als katalytisch aktive Verbindung D1) eine in das Polyurethan einbaubare Aminverbindung und weiterhin die nicht katalytisch aktive Verbindung D2), bei welcher es sich um ein nicht in das Polyurethan einbaubares, katalytisch aktives Salz handelt, und das molare Verhältnis von D1/D2 beträgt 0,1 bis 16,3, besonders bevorzugt von 0,3 bis 10 und ganz besonders bevorzugt von 0,8 bis 6,0. In einer besonders bevorzugten Ausführungsform werden 3-(Dimethylamino)Propylharnstoff und Kaliumacetat in einem molaren Verhältnis D1/D2 von 0,1 bis 6,0, besonders bevorzugt von 0,3 bis 10 und ganz besonders bevorzugt von 0,8 bis 6,0, eingesetzt. Die bevorzugten Katalysatorverhältnisse bzw. Katalysatoren wirken sich besonders günstig auf einen definierten Viskositätsaufbau aus.

In der Herstellung des PUR/PIR-Hartschaums wird als Treibmittelkomponente C) überkritisches $CO_2$ verwendet. Diese wird in einer solchen Menge verwendet, wie sie zur Erzielung einer dimensionsstabilen Schaummatrix und der gewünschten Rohdichte nötig ist. In der Regel sind dies 0,5 - 30 Gewichtsteile Treibmittel bezogen auf 100 Gewichtsteile der Komponente A. Als zusätzliche Treibmittel können physikalische Treibmittel eingesetzt werden. Unter "physikalischen Treibmitteln" werden im Rahmen der vorliegenden Erfindung solche Verbindungen verstanden, die aufgrund ihrer physikalischen Eigenschaften leicht flüchtig sind und nicht mit der Isocyanatkomponente reagieren.

Die zusätzlichen physikalischen Treibmittel können ausgewählt sein aus der Gruppe aus Kohlenwasserstoffen (z. B. n-Pentan, iso-Pentan, cyclo-Pentan, Butan, Isobutan, Propan), Ethern (z.B. Methylal), halogenierten Ethern, perfluorierten und teilfluorierten Kohlenwasserstoffen mit 1 bis 8 Kohlenstoffatomen, z. B. Perfluorhexan, HFC 245fa (1,1,1,3,3-Pentafluorpropan), HFC 365mfc (1,1,1,3,3-Pentafluorbutan), HFC 134a oder deren Mischungen verwendet, sowie (hydro)fluorierte Olefine, wie z.B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en), sowie deren Gemische untereinander.

Das $CO_2$ als physikalisches Treibmittel wird im überkritischen oder nahekritischen Zustand eingesetzt. Im Rahmen der vorliegenden Erfindung liegen nahekritische Bedingungen dann vor, wenn die folgende Bedingung erfüllt ist: $(T_c - T)/T \leq 0,4$ und/oder $(p_c - p)/p \leq 0,4$. Hierbei bedeuten T die im Verfahren herrschende Temperatur, Tc die kritische Temperatur des Treibmittels oder Treibmittelgemisches, p der im Verfahren herrschende Druck und pc der kritische Druck für das Treibmittel oder Treibmittelgemisch. Vorzugsweise liegen nahekritische Bedingungen vor, wenn gilt: $(T_c - T)/T \leq 0,3$ und/oder $(p_c - p)/p \leq 0,3$ und besonders bevorzugt $(T_c - T)/T \leq 0,2$ und/oder $(p_c - p)/p \leq 0,2$.

Besonders geeignete Bedingungen für die Durchführung des erfindungsgemäßen Verfahrens bei Verwendung von $CO_2$ sind solche Drücke und Temperaturen oberhalb des kritischen Punktes von $CO_2$, also $\geq$ 73,7 bar und $\geq$ 30,9 °C, bevorzugt zwischen 74 bar und 350 bar sowie zwischen 31 °C und 100 °C, besonders bevorzugt zwischen 75 bar und 200 bar sowie zwischen 32 °C und 60 °C.

Werden weitere Treibmittel zugesetzt, enthält die Treibmittelmischung in einer Ausführungsform bevorzugt mehr als 60 Gew.-% Kohlenstoffdioxid, besonders bevorzugt mehr als 75 Gew.-%.

Zusätzlich zu oder auch statt der zum $CO_2$ zugesetzten physikalischen Treibmittel können auch chemische Treibmittel (auch "Co-Treibmittel") verwendet werden. Bei diesen handelt es sich besonders bevorzugt um Wasser und / oder Ameisensäure. Bevorzugt werden die Co-Treibmittel in einer Menge von 0 bis 6 Gew.-%, besonders bevorzugt von 0,5 bis 4 Gew.-%, bezogen auf die Gesamtmenge an Verbindungen mit gegenüber Isocyanatgruppen reaktiven Wasserstoffatomen in dem schaumbildenden Reaktionsgemisch R), eingesetzt.

Der Anteil des Treibmittels C) in der Mischung der Komponenten A), C), D) und E) beträgt bevorzugt $\geq 1$ Gew.-% bis $\leq 30$ Gew.-%, bevorzugt $\geq 4$ Gew.-% bis $\leq 20$ Gew.-%., besonders bevorzugt $\geq 6$ Gew.-% bis $\leq 16$ Gew.-%; der Anteil des Treibmittels in dem schaumbildenden Reaktionsgemisch R) beträgt 0,5 Gew.-% bis 15 Gew.-%, bevorzugt 2 Gew.-% bis 10 Gew.-%, besonders bevorzugt $\geq 3$ Gew.-% bis $\leq 8$ Gew.-%.

Die Komponente B) ist ein Polyisocyanat, also ein Isocyanat mit einer NCO-Funktionalität von $\geq 2$. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'-und/oder 4,4'-Diphenylmethandiisocyanat (MDI) und/oder höhere Homologe, 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen.

Als Isocyanatkomponente B) werden bevorzugt Mischungen der Isomeren des Diphenylmethandiisocyanats ("monomeres MDI", abgekürzt "mMDI") und dessen Oligomeren ("oligomeres MDI") eingesetzt. Mischungen aus monomerem MDI und oligomerem MDI werden allgemein als "polymeres MDI" (pMDI) bezeichnet. Die Oligomere des MDI sind höherkernige Polyphenyl-polymethylen-polyisocyanate, d.h. Gemische der höherkernigen Homologen des Diphenyl-methylen-diisocyanates, welche eine NCO - Funktionalität f > 2 aufweisen und folgende Strukturformel aufweisen: $C_{15}H_{10}N_2O_2$ $[C_8H_5NO]_n$, wobei n = ganze Zahl > 0, bevorzugt n = 1, 2, 3 und 4, ist. Höherkernige Homologe $C_{15}H_{10}N_2O_2$ $[C_8H_5NO]_m$, m = ganze Zahl $\geq 4$) können ebenfalls im Gemisch aus organischen Polyisocyanaten a) enthalten sein. Als Isocyanatkomponente B) weiterhin bevorzugt sind Mischungen aus mMDI und/oder pMDI mit maximal bis zu 20 Gew.-%, mehr bevorzugt maximal 10 Gew.-% an weiteren, für die Herstellung von Polyurethanen bekannten aliphatischen, cycloaliphatischen und insbesondere aromatischen Polyisocyanaten, ganz besonders TDI.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Statt oder zusätzlich zu den oben genannten Polyisocyanaten können auch geeignete NCO-Präpolymere als organische Isocyanatkomponente B) eingesetzt werden. Die Präpolymere sind herstellbar durch Umsetzung eines oder mehrerer Polyisocyanate mit einem oder mehreren Polyolen, entsprechend den unter den Komponenten A1) und A2) beschriebenen Polyolen.

Es ist möglich, dass das Isocyanat ein Präpolymer ist, welches erhältlich ist durch Reaktion eines Isocyanats mit einer NCO-Funktionalität von $\geq 2$ und Polyolen mit einem Molekulargewicht von $\geq 62$ g/mol bis $\leq 8000$ g/mol und OH-Funktionalitäten von $\geq 1,5$ bis $\leq 6$.

Der NCO-Gehalt beträgt bevorzugt von $\geq 29,0$ Gew.-% bis $\leq 32,0$ Gew.%, und weist bevorzugt eine Viskosität bei 25 °C von $\geq 80$ mPas bis $\leq 2000$ mPas, besonders bevorzugt von $\geq 100$ mPas bis $\leq 800$ mPas auf (dynamische Viskosität bestimmt nach DIN 53019, bei 25°C).

Die Anzahl der NCO-Gruppen in der Polyisocyanatkomponente B) und die Anzahl der gegenüber Isocyanaten reaktiven Gruppen der Komponente A) können beispielsweise in einem Zahlenverhältnis von $\geq 50:100$ bis $\leq 500:100$ zueinander stehen. Zur Herstellung der PolyurethanHartschaumstoffe werden in der Regel die Komponenten A) und B) in solchen Mengen zur Umsetzung gebracht, dass die Isocyanat-Kennzahl der Rezeptur 80 - 150, bevorzugt 90 - 130, besonders bevorzugt 95 -110 beträgt. In diesem Bereich werden bevorzugt Urethangruppen gebildet. In einer anderen bevorzugten Ausführungsform beträgt die Isocyanat-Kennzahl 150 - 400. In diesem Bereich weisen die Schaumstoffe einen hohen Anteil an Isocyanurat-Funktionen auf, welche z.B. eine inhärente Flammwidrigkeit der Schaumstoffe bewirken.

Im Schritt i) des erfindungsgemäßen Verfahrens wird das schaumbildende Reaktionsgemisch R) aus den Komponenten A) - E) hergestellt.

Hierfür kann die Mischung umfassend die Komponenten A), D), E) beispielsweise in einem Kessel vorgelegt werden, anschließend mit der Komponente C) vermischt werden und mit dem Polyisocyanat B) versetzt werden. Die Vermischung der Komponenten kann auch in einem Mischkopf erfolgen.

Die Vermischung, insbesondere mit den Komponenten C) und B), kann unter Druck erfolgen. Erfindungsgemäß werden die Komponenten A), D), E) und C) mit der Komponente B) in einem Hochdruck-Mischkopf vermischt.

Es handelt sich bei der Treibmittelkomponente C) um $CO_2$ im überkritischen Zustand und die Umsetzung der Komponenten findet unter für $CO_2$ überkritischen Bedingungen statt. In diesem Fall sind geeignete Drücke im Mischkopf und/oder in der Austragsleitung bzw. den Austragsleitungen für die Herstellung des Polyurethanschaums beispielsweise im Bereich von $\geq 73{,}7$ bar bis $\leq 350$ bar und vorzugsweise im Bereich von $\geq 75$ bar bis $\leq 200$ bar. Geeignete Temperaturen sind beispielsweise $\geq 30{,}9\,°C$ bis $\leq 100\,°C$ und vorzugsweise $\geq 32\,°C$ bis $\leq 60\,°C$. Bei solchen Drücken können überkritische Bedingungen für das eingesetzte Treibmittel aufrechterhalten werden.

In einer weiteren Ausführungsform beträgt die Verweilzeit der Mischung im Mischkopf unter überkritischen Bedingungen des Treibmittels $\geq 0$ Sekunden bis $\leq 20$ Sekunden, bevorzugt von $\geq 0{,}1$ Sekunden bis $\leq 10$ Sekunden und besonders bevorzugt von $\geq 0{,}5$ Sekunden bis $\leq 5$ Sekunden. Dies führt dazu, dass die Mischung unter überkritischen Bedingungen polymerisieren kann. Die Verweilzeit kann durch das Volumen der Reaktionskammer (=Mischkammer und / oder Rohrleitungen), in der überkritische Bedingungen herrschen, geteilt durch das Volumen der Mischung, die in einer bestimmten Zeiteinheit gefördert wird, bestimmt werden.

In Schritt ii) des erfindungsgemäßen Verfahrens wird das erfindungsgemäße schaumbildende Reaktionsgemisch R) aus den Komponenten A) - E) in eine Form eingebracht.

Erfindungsgemäß handelt es sich bei der Form um eine geschlossene Form, wobei der Gegendruck in der Form während des Einspritzens 2 - 90 bar, bevorzugt 2 - 80 bar, besonders bevorzugt 5 - 40 bar beträgt.

Mögliche Ausführungsformen hierfür sind die folgenden: Der Gegendruck wird durch Beaufschlagung der Form mit Gas (Druckluft bzw. Stickstoff) entweder direkt und/oder durch eine schwimmende Dichtung, die den Druck-beaufschlagten Raum in Gas- und Reaktionsraum unterteilt, erreicht, und über ein Proportionalventil eingestellt, gehalten und letztlich entlastet.

In Schritt iii) des Verfahrens lässt man das Reaktionsgemisch aufschäumen.

Eine bevorzugte Ausführungsform des Schritts iii) ist die folgende:
Der Druck in der Form wird nach Ende Schritts ii) für einen Zeitraum 1, welcher bevorzugt 1 - 40 Sekunden, besonders bevorzugt 5 - 20 Sekunden und ganz besonders bevorzugt 8 - 17 Sekunden beträgt, konstant gehalten, wobei die Viskosität des Reaktionsgemisches zunächst ohne aufzuschäumen ansteigt. Es hat sich gezeigt, dass das Halten des Druckes während der bevorzugten Zeitdauer in besonders günstigen Viskositätsbereichen des Gemisches für diesen Reaktionsabschnitt resultiert. Nach Beendigung des Zeitraums 1 wird die Form entspannt. Die Entlastung des Drucks aus der Form erfolgt innerhalb eines Zeitraums 2, mit einer Druckentlastungsrate von 1-90 bar / s, bevorzugt 1 - 80 bar / s, besonders bevorzugt 2 - 70 bar / s. Die Entlastung kann insbesondere über ein Proportionalventil erfolgen. Während des Zeitraums 2 schäumt das Reaktionsgemisch auf. Eine zu schnelle Entlastung wirkt sich negativ auf die Zellstabilität, die zu langsame Entlastung negativ auf die Aufschäumreaktion aus.

In Schritt iv) des Verfahrens wird der PUR/PIR-Hartschaum entformt.

Eine besonders bevorzugte Ausführungsform des erfindungsgemäßen Verfahrens umfasst die Schritte:

i) Herstellen eines schaumbildenden Reaktionsgemisches R) aus

- einer Isocyanat-reaktive Komponente A) enthaltend mindestens eine Polyolkomponente A1) ausgewählt aus der Gruppe bestehend aus Polyetherpolyolen, Polyesterpolyolen, Polycarbonatpolyolen, Polyether-Polycarbonatpolyolen und Polyetheresterpolyolen, welche eine OH - Funktionalität F von > 2,5 aufweist,

- mindestens einer Polyisocyanatkomponente B),

- mindestens einem Treibmittel C),

- einer Katalysatorkomponente D) mindestens enthaltend eine katalytisch aktive Verbindung D1) mit Zerewitinoff-aktiven Wasserstoffen,

- Hilfs- und Zusatzstoffen E) mindestens umfassend eine zellöffnende Verbindung,

wobei der Anteil aller in der isocyanatreaktiven Komponente A) vorhandenen primären OH - Funktionen an der Gesamtzahl der endständigen OH - Funktionen in der Komponente A) mindestens 30 % beträgt,

ii) Einbringen des schaumbildenden Reaktionsgemisches aus Komponente A), Treibmittel und Polyisocyanatkomponente B) in eine geschlossene Form, wobei der Gegendruck in der Form während des Einspritzens 2 - 90 bar beträgt,

iii) Halten des Drucks in der Form für einen Zeitraum 1 von 1 - 40 s nach Ende des Schritts ii), und anschließendem Entlasten des Drucks aus der Form während eines Zeitraums 2 mit einer Druckentlastungsrate von 1 - 90 bar / s,

iv) Entformen des PUR/PIR - Hartschaums.

Ein weiterer Gegenstand der vorliegenden Erfindung ist ein PUR/PIR-Hartschaum, der durch das erfindungsgemäße Verfahren erhältlich ist oder erhalten wurde.

Durch das erfindungsgemäße Verfahren lassen sich PUR/PIR-Hartschäume mit einer Rohdichte von 30 - 90 $kg/m^3$, bevorzugt 30 - 70 $kg/m^3$ mit gleichzeitig vielen offenen und besonders kleinen Zellen erhalten. So können harte Schäume mit einer Offenzelligkeit von > 90%, insbesondere > 94% hergestellt werden, bei denen die Zellen einen durchschnittlichen Durchmesser von <50 $\mu$m zeigen. Die Schäume weisen gute mechanische Eigenschaften, z.B. gute Druckfestigkeiten auf.

Aus den erfindungsgemäßen PUR/PIR-Schäumen lassen sich in bevorzugter Weise geschäumte Formkörper und Verbundsysteme enthaltend diese Formkörper herstellen. Die Verbundsysteme sind oft sowohl an der Ober- als auch an der Unterseite durch Dekorschichten begrenzt. Als Dekorschichten kommen unter anderem Metalle, Kunststoffe, Holz und Papier in Frage. Als Anwendungsgebiete solcher diskontinuierlich hergestellten PUR/PIR-Verbundsysteme sind insbesondere zu nennen die technische Isolierung von Geräten wie Kühlschränken, Kühltruhen, Kühlgefrierkombinationen und Boilern, Kühlcontainern und Kühlboxen sowie von Rohren.

Der Einsatz von PUR/PIR-Schäumen auf diesen Gebieten ist dem Fachmann grundsätzlich bekannt und wurde schon vielfach beschrieben. Die erfindungsgemäßen PUR/PIR-Schäume eignen sich außerordentlich gut für diese Zwecke, da sie sich aufgrund ihrer Feinzelligkeit durch geringe Wärmeleitzahlen auszeichnen, die durch das Anlegen von Vakuum noch weiter gesteigert werden können.Die Erfindung betrifft zudem einen Kühlschrank, einen Gefrierschrank oder eine Kühl-Gefrierkombination, umfassend einen erfindungsgemäß erhältlichen PUR/PIR-Hartschaum, wobei die bereitgestellte Form insbesondere ein Gehäuseteil des Kühlschranks, des Gefrierschranks oder der Kühl-Gefrierkombination ist. Die Erfindung soll anhand der nachfolgenden Beispiele und Vergleichsbeispiele näher erläutert werden.

### Beispiele

Verwendete Normen bzw. Messgeräte:

Bestimmung der Rohdichte: Schaumstoffe aus Kautschuk und Kunststoffen - Bestimmung der Rohdichte (ISO 845:2006); Deutsche Fassung EN ISO 845:2009

Bestimmung der Offenzelligkeit: - Bestimmung des Volumenanteils offener und geschlossener Zellen (ISO 4590:2002); Deutsche Fassung EN ISO 4590:2003

Bestimmung der Druckfestigkeit: Harte Schaumstoffe -Bestimmung der Druckeigenschaften (ISO 844:2014); Deutsche Fassung EN ISO 844:2014

Bestimmung der OH-Zahl: Die Bestimmung der Hydroxylzahl - Teil 2: Verfahren mit Katalysator gemäß DIN 53240-2, Stand November 2007

Bestimmung der Zellgröße: Lichtmikroskopische Auswertung via Lichtmikrospok VHX 5000; Der zu vermessende Probekörper wird an 3 unterschiedlichen Stellen jeweils über einen kreisförmigen Bereich mit einem Durchmesser von 5 mm untersucht. Hierbei wird die Auflösung so gewählt, dass der ausgewählte Bereich rund 100 Zellen erfasst. Danach werden 100 Zellen vermessen, der kleinste und größte Zelldurchmesser sowie der durchschnittliche Zelldurchmesser berechnet.

Die Angabe der Funktionalität f in Tabelle 1 bezieht sich auf die zahlenmittlere Funktionalität der Mischung aus den in der Formulierung enthaltenden Polyolen.

Die Angabe des Anteils an primären OH-Funktionen in [%] in Tabelle 1 bezieht sich auf den Anteil an primären OH-Funktionen an der Gesamtzahl der OH-Funktionen in der Mischung aus den in der Formulierung enthaltenden Polyolen.

### Beispiel 1 sowie Vergleichsbeispiele 2 und 3:

Gemäß den in der nachfolgenden Tabelle 1 aufgeführten Rezepturen wurden $CO_2$ und n-Pentan getriebene Polyurethanschäume hergestellt. Wenn nicht anders vermerkt, sind Mengenangaben als Gewichtsteile zu verstehen. Es kamen folgende Stoffe zum Einsatz:

Polyol 1:    Polyetherpolyol auf Basis Trimethylolpropan und Propylenoxid mit einer Hydroxylzahl von 800 mg KOH/g, einer Funktionalität von 3 und einer Viskosität von 6100 mPas bei 25 °C

Polyol 2:    Polyetherpolyol auf Basis Trimethylolpropan und Ethylenoxid mit einer Hydroxylzahl von 550 mg KOH/g, einer Funktionalität von 3 und einer Viskosität von 505 mPas bei 25 °C

| Polyol 3: | Polyetherpolyol auf Basis Trimethylolpropan und Propylenoxid mit einer Hydroxylzahl von 550 mg KOH/g, einer Funktionalität von 3 und einer Viskosität von 1800 mPas bei 25 °C |

| Polyol 4: | Polyetherpolyol auf Basis 1,2-Propandiol und Propylenoxid mit einer Hydroxylzahl von 56 mg KOH/g, einer Funktionalität von 2 und einer Viskosität von 310 mPas bei 25 °C |

| Polyol 5: | Polyetherpolyol auf Basis 1,2 Propandiol und Propylenoxid mit einer Hydroxylzahl von 112 mg KOH/g, einer Funktionalität von 2 und einer Viskosität von 140 mPas bei 25 °C |

| Polyol 6: | Polyetherpolyol auf Basis Glycerin und Propylenoxid mit einer Hydroxylzahl von 231 mg KOH/g, einer Funktionalität von 3 und einer Viskosität von 350 mPas bei 20 °C |

| B 8443: | Schaumstabilisator (Evonik) |

| Ortegol 500: | Zellöffner (Evonik) |

| Desmorapid PU 1792: | Katalysator, Kaliumacetat 25 % ig in Diethylenglykol (Covestro) |

| Dabco NE1070: | Katalysator, 3-(Dimethylamino)propylharnstoff (Air Products) |

| n-Pentan: | Treibmittel |

| Isocyanat: | Gemisch aus monomerem und polymerem MDI mit einer Viskosität von ca. 290 m Pa*s bei 20 °C (Desmodur 44V20L, Covestro) |

Herstellung von Polyurethanfreischäumen, Vergleichsbeispiel 3:

Zur Herstellung von Polyurethanfreischäumen im Labor wurden 200g eine Zusammensetzung aus der jeweiligen Polyolformulierung aus den in der nachfolgenden Tabelle 1 aufgeführten Polyolen, Stabilisatoren und Katalysatoren sowie dem Treibmittel hergestellt. Zur Herstellung des Reaktionsgemisches wurde diese Zusammensetzung aus Polyolformulierung und Treibmittel mit der entsprechenden Menge Isocyanat via Pendraulikrührer für 10 Sekunden bei 23 °C vermischt und in eine nach oben hin geöffnete Form (20 cm x 20 cm x 18 cm) ausgegossen. Die genauen Rezepturen sind in Tabelle 1 zusammengefasst, die Ergebnisse der Eigenschaften der Reaktionsgemische sowie der physikalischen Untersuchungen der Schäume in Tabelle 2.

**Herstellung von Polyurethanformschäumen, Vergleichsbeispiel 2:**

Zur Herstellung von Polyurethanformschäumen im Labor wurden 100g einer Zusammensetzung aus der jeweiligen Polyolformulierung aus den in der nachfolgenden Tabelle 1 aufgeführten Polyolen, Stabilisatoren und Katalysatoren sowie dem Treibmittel hergestellt. Zur Herstellung des Reaktionsgemisches wurde diese Zusammensetzung aus Polyolformulierung und Treibmittel mit der entsprechenden Menge Isocyanat via Pendraulikrührer für 10 Sekunden bei 23 °C vermischt und in eine Form (20 cm x 20 cm x 6 cm) ausgegossen. Die Form wurde unmittelbar nach dem Ausgießen fest verschlossen. Der so hergestellte Formkörper wurde nach 5 min aus der Form entformt. Die genauen Rezepturen sind in Tabelle 1 zusammengefasst, die Ergebnisse der physikalischen Untersuchungen der Schäume in Tabelle 2.

**Herstellung von Polyurethanformschäumen auf einer Hochdruckanlage, Beispiel 1:**

Zur Herstellung von Polyurethanfreischäumen auf einer Hochdruckanlage wurde eine Polyolformulierung aus den in der nachfolgenden Tabelle 1 aufgeführten Polyolen, Stabilisatoren und Katalysatoren hergestellt. Diese wurde in einer Standard- Hochdruckmischanlage als Polyolkomponente eingesetzt und bei einem Druck von 150 bar und einer Temperatur von 50 °C mit dem Treibmittel $CO_2$ vermischt. Hierbei herrschten für das Treibmittel überkritische Bedingungen. In einem Hochdruckmischkopf wurde diese Mischung mit dem Isocyanat, das mit einem Druck von 150 bar und einer Temperatur von 35 °C gefördert wurde, vermischt. Die Schussmenge betrug 40 g/s, entsprechend einem Volumenstrom von 48 ml/s (Dichte der Mischung 1,2 g/ml). Das so erhaltene Reaktionsgemisch wurde in eine mit 10 bar Gegendruck vorgespannte geschlossene Form (mit einem Volumen von 1 1) mit einer Formtemperatur von 50 °C injiziert. Nach Ende der Injektion wurde der vorgespannte Gegendruck von 10 bar noch für weitere 12 s gehalten und erst dann innerhalb von <2 s auf Umgebungsdruck entspannt. Der so hergestellte Formkörper wurde nach 5 min aus der Form entformt. Die genauen Rezepturen sind in Tabelle 1 zusammengefasst, die Ergebnisse der physikalischen Untersuchungen der Schäume in Tabelle 2.

Tabelle 1

| | | | Vergleichsbeispiel 2 | Beispiel 1 | Vergleichsbeispiel 3 |
|---|---|---|---|---|---|
| | | | Formschaum | Formschaum | Freischaum |
| Polyol 1 | [Gew.%] | | 13,00 | 13,00 | 13,00 |
| Polyol 2 | [Gew.%] | | 32,50 | 32,50 | - |
| Polyol 3 | [Gew.%] | | - | - | 32,50 |
| Polyol 4 | [Gew.%] | | 13,50 | 13,50 | 13,50 |
| Polyol 5 | [Gew.%] | | 9,50 | 9,50 | 9,50 |
| Polyol 6 | [Gew.%] | | 27,00 | 27,00 | 27,00 |
| B 8443 | [Gew.%] | | 1,00 | 1,00 | 1,50 |
| Ortegol 500 | [Gew.%] | | 0,13 | 0,13 | 0,50 |
| Desmorapid PU 1792 | [Gew.%] | | 1,00 | 1,00 | 1,00 |
| Dabco NE1070 | [Gew.%] | | 0,65 | 0,65 | 0,65 |
| Funktionalität f | | | 2,9 | 2,9 | 2,9 |
| Anteil primärer OH-Funktionen [%] | | | 46,0 | 46,0 | 0,0 |
| Isocyanat | [Gew.%] | | 92,60 | 92,60 | 92,60 |
| n-Pentan | [Gew.%] | | 10,00 | | 6,70 |
| scCO2 | [Gew.%] | | | 5,00 | |
| Index | NCO/OH | | 100,00 | 100,00 | 100,00 |

Tabelle 2

| | | | Vergleichsbeispiel 2 | Beispiel 1 | Vergleichsbeispiel 3 |
|---|---|---|---|---|---|
| Startzeit | [s] | | - | - | 50 |
| Abbindezeit | [s] | | - | - | 87 |
| Steigzeit | [s] | | - | - | 90 |
| Klebfreizeit | [s] | | - | - | 95 |
| | | | | | |
| Rohdichte | [kg/m3] | | 61 | 67 | 63 |
| | | | | | |
| Druckfestigkeit bei 10 % Stauchung | [MPa] | parallel | 0,34 | nicht bestimmt | 0,41 |
| | | quer | 0,34 | | 0,29 |
| | | | | | |
| Offenzelligkeit | [%] | | 96,4 | 95,5 | 25,6 |
| Zellgröße Durchschnitt | μm | | 83 | 17 | 126 |
| Zellgröße kleinste Zelle | μm | | 33 | 3 | 73 |
| Zellgröße größte Zelle | μm | | 141 | 38 | 174 |

Beispiel 1 zeigt, dass mit der angeführten Rezeptur ein sehr feinzelliger Hartschaum mit einem hohen Anteil an offenen Zellen hergestellt werden kann.

Beispiel 1 zeigt deutlich, dass die Verarbeitung der Rezeptur auf einer Hochdruckanlage mit überkritischen $CO_2$ als Treibmittel und 10 bar Gegendruck auf der Form zu feineren (als beispielsweise im Vergleich 2 mit gleicher Rezeptur), gleichzeitig offenzelligen Hartschäumen führt.

Durch den Austausch von Polyol 2 durch Polyol 3 im Vergleichsbeispiel 5 kann zwar die durchschnittliche Zellgröße von 126 $\mu$m erreicht werden, allerdings liegt der Anteil der offenen Zellen nur noch bei 25,6 %.

**Patentansprüche**

1. Verfahren zur Herstellung von PUR/PIR-Hartschaumstoffen mit einer Rohdichte von 30 - 90 kg/m$^3$ gemäß ISO 845:2006, bevorzugt 30 - 70 kg/m$^3$, einer Offenzelligkeit von > 90% gemäß ISO 4590:2002, bevorzugt $\geq$ 94% und mit einem durchschnittlichen Zelldurchmesser von < 50 $\mu$m gemäß Lichtmikroskopischer Auswertung, umfassend die Schritte

    i) Herstellen des erfindungsgemäßen Reaktionsgemisches R) enthaltend eine Polyolformulierung P) enthaltend

    - eine Isocyanat-reaktive Komponente A) umfassend

    mindestens eine Polyolkomponente A1) mit einer Funktionalität f von > 2,5, welche ausgewählt ist aus der Gruppe bestehend aus Polyetherpolyolen, Polyesterpolyolen, Polycarbonatpolyolen, Polyether-Polycarbonatpolyolen und Polyetheresterpolyolen,
    - eine Katalysatorkomponente D) mindestens enthaltend eine katalytisch aktive Verbindung D1), welche über Zerewitinoff-aktive Wasserstoffe verfügt,
    - Hilfs- und Zusatzstoffe E) mindestens umfassend eine zellöffnende Verbindung,

    wobei der Anteil aller in der Isocyanat-reaktiven Komponente A) vorhandenen primären OH - Funktionen an der Gesamtzahl der endständigen OH - Funktionen in der Komponente A) mindestens 30 % beträgt,

    eine Polyisocyanatkomponente B) und
    als Treibmittelkomponente C) $CO_2$ im überkritischen Zustand ,

    ii) Einbringen des schaumbildenden Reaktionsgemisches R) in eine Form,
    iii) Aufschäumenlassen des Reaktionsgemisches R) und
    iv) Entformen des PUR/PIR-Hartschaums,

    wobei Schritt i) sowie gegebenenfalls ii) unter überkritischen Bedingungen stattfindet,

    und wobei Schritt i) in einem Hochdruckmischkopf erfolgt,
    und wobei in Schritt ii) das schaumbildende Reaktionsgemisch R) aus Komponente A), Treibmittel C) und Polyisocyanatkomponente B) in eine geschlossene Form eingebracht wird, wobei der Gegendruck in der Form während des Einspritzens 2 - 90 bar beträgt.

2. Verfahren gemäß Anspruch 1, **dadurch gekennzeichnet, dass** in Schritt iii) der Druck in der Form für einen Zeitraum 1 von 1 - 40 s nach Ende des Schritts ii) gehalten wird, und anschließend der Druck aus der Form während eines Zeitraums 2 mit einer Druckentlastungsrate von 1 - 90 bar / s entlastet wird.

3. Verfahren gemäß Anspruch 1, **dadurch gekennzeichnet, dass** die Polyolkomponente A1) eine Hydroxylzahl von 280 - 600 mg KOH/g (DIN 53240-2 (2007)) aufweist.

4. Verfahren gemäß Anspruch 1, **dadurch gekennzeichnet, dass** die isocyanatreaktive Komponente A) zu mindestens 65 Gew.-% aus der Polyolkomponente A1) besteht, die eine Hydroxylzahl zwischen 280 bis 600 mg KOH/g und eine Funktionalität von $\geq$ 2,8 bis $\leq$ 6,0 aufweist, und der Anteil an primären OH-Funktionen in der Komponente A) mindestens 35 % beträgt (bezogen auf alle endständigen OH-Funktionen in der Komponente A).

5. Verfahren gemäß Anspruch 1, **dadurch gekennzeichnet, dass** die isocyanatreaktive Komponente A) zu mindestens 60 Gew.-% aus Polyetherpolyol besteht.

6. Verfahren gemäß Anspruch 1, **dadurch gekennzeichnet, dass** der Gehalt an zellöffnender Komponente E) 0,1 - 1,0 Gew.-% beträgt.

7. Verfahren gemäß Anspruch 1, **dadurch gekennzeichnet, dass** sie die katalytisch aktive Verbindung D1) in einer Menge von ≥ 0,01 bis < 2 Gew.-%, bezogen auf das Gesamtgewicht der Komponente A), enthält.

8. Verfahren gemäß Anspruch 1, wobei der Gehalt an Treibmittelkomponente C) 0,5 Gew.-% bis 15 Gew.-% bezogen auf das Gesamtgewicht von R) beträgt.

9. Offenzelliger PUR/PIR-Hartschaum, der durch das Verfahren gemäß einem der Ansprüche 1 - 8 erhältlich ist.

10. Kühlschrank, Gefrierschrank oder eine Kühl-Gefrierkombination, enthaltend einen PUR/PIR-Hartschaum gemäß Anspruch 9.


**Claims**

1. Process for producing rigid PUR/PIR foams having an apparent density of 30-90 kg/m$^3$ according to ISO 845:2006, preferably 30-70 kg/m$^3$, an open-cell content of > 90% according to ISO 4590:2002, preferably ≥ 94%, and having an average cell diameter of < 50 μm according to optical microscopy evaluation, comprising the steps of:

   i) producing the inventive reaction mixture R) containing

   a polyol formulation P) containing

   - an isocyanate-reactive component A) comprising
   at least one polyol component A1) having a functionality f of > 2.5 which is selected from the group consisting of polyether polyols, polyester polyols, polycarbonate polyols, polyether polycarbonate polyols and polyether ester polyols,
   - a catalyst component D) at least containing a catalytically active compound D1) having Zerewitinoff-active hydrogens,
   - assistant and additive substances E) at least comprising a cell-opening compound,

   wherein the proportion of all primary OH functions present in the isocyanate-reactive component A) based on the total number of terminal OH functions in the component A) is at least 30%,
   a polyisocyanate component B) and
   $CO_2$ in the supercritical state as blowing agent component C),

   ii) introducing the foam-forming reaction mixture R) into a mold,
   iii) foaming the reaction mixture R) and
   iv) demolding the rigid PUR/PIR foam,

   wherein step i) and optionally ii) are carried out under supercritical conditions,

   and wherein step i) is carried out in a high-pressure mixing head,
   and wherein in step ii) the foam-forming reaction mixture R) composed of component A), blowing agent C) and polyisocyanate component B) is introduced into a sealed mold, wherein the counterpressure in the mold during injection is 2-90 bar.

2. Process according to Claim 1, **characterized in that** in step iii) the pressure in the mold is maintained for a period 1 of 1-40 seconds after termination of step ii) and subsequently the pressure is released from the mold over a period 2 at a pressure release rate of 1-90 bar/s.

3. Process according to Claim 1, **characterized in that** the polyol component A1) has a hydroxyl number of 280 - 600 mg KOH/g (DIN 53240-2 (2007)).

4. Process according to Claim 1, **characterized in that** the isocyanate-reactive component A) consists to an extent of at least 65% by weight of the polyol component A1) which has a hydroxyl number between 280 to 600 mg KOH/g and a functionality of $\geq 2.8$ to $\leq 6.0$ and the proportion of primary OH functions in the component A) is at least 35% (based on all terminal OH functions in the component A).

5. Process according to Claim 1, **characterized in that** the isocyanate-reactive component A) consists of polyether polyol to an extent of at least 60% by weight.

6. Process according to Claim 1, **characterized in that** the content of cell-opening component E) is 0.1-1.0% by weight.

7. Process according to Claim 1, **characterized in that** it contains the catalytically active compound D1) in an amount of $\geq 0.01\%$ to < 2% by weight based on the total weight of the component A).

8. Process according to Claim 1, wherein the content of blowing agent component C) is 0.5% by weight to 15% by weight based on the total weight of R).

9. Open-celled rigid PUR/PIR foam obtainable by the process according to any of Claims 1-8.

10. Refrigerator, freezer or a fridge-freezer containing a rigid PUR/PIR foam according to Claim 9.


**Revendications**

1. Procédé de fabrication de matériaux alvéolaires rigides en PUR/PIR ayant une masse volumique apparente de 30 à 90 kg/m$^3$ selon ISO 845:2006, de préférence de 30 à 70 kg/m$^3$, un pourcentage volumique des cellules ouvertes > 90 % selon ISO 4590:2002, de préférence $\geq 94$ %, et un diamètre moyen des cellules < 50 $\mu$m par évaluation au microscope optique, comprenant les étapes suivantes :

   i) fabrication du mélange réactionnel R) selon l'invention, contenant

      une formulation de polyols P) contenant

         - un composant A) réactif vis-à-vis des isocyanates, comprenant
         au moins un composant polyol A1) ayant une fonctionnalité f > 2,5, qui est choisi dans le groupe consistant en les polyétherpolyols, les polyesterpolyols, les polycarbonatepolyols, les polyéther-polycarbonatepolyols et les polyétheresterpolyols,
         - un composant catalyseur D) contenant au moins un composé catalytiquement actif D1), qui dispose d'hydrogènes à activité de Zerewitinoff,
         - des adjuvants et additifs E), comprenant au moins un composé ouvrant les cellules,

      la proportion de toutes les fonctions OH primaires présentes dans le composant A) réactif vis-à-vis des isocyanates, par rapport au nombre total des fonctions OH terminales dans le composant A) étant d'au moins 30 %,
      un composant polyisocyanate B) et
      en tant que composant agent d'expansion C), du $CO_2$ à l'état supercritique,

   ii) introduction du mélange réactionnel R) formant une mousse dans un moule,
   iii) expansion du mélange réactionnel R) et
   iv) démoulage du matériau alvéolaire rigide en PUR/PIR, l'étape i), et éventuellement ii), ayant lieu dans des conditions supercritiques,

   et l'étape i) étant réalisée dans une tête de mesure haute pression,
   et, dans l'étape ii), le mélange réactionnel R) formant une mousse, constitué du composant A), du composant agent d'expansion C) et du composant polyisocyanate B), étant introduit dans un moule fermé, la contre-pression dans le moule pendant l'injection étant de 2 à 90 bar.

2. Procédé selon la revendication 1, **caractérisé en ce que** dans l'étape iii), la pression dans le moule est maintenue pendant un temps 1 de 1 à 40 secondes après la fin de l'étape ii), puis on détend la pression du moule pendant un temps 2, à un taux de détente de 1 à 90 bar/seconde.

**3.** Procédé selon la revendication 1, **caractérisé en ce que** le composant polyol A1) présente un indice d'hydroxyle de 280 à 600 mg KOH/g (DIN 53240-2 (2007)).

**4.** Procédé selon la revendication 1, **caractérisé en ce que** le composant A) réactif vis-à-vis des isocyanates est constitué à raison d'au moins 65 % en poids du composant polyol A1), qui présente un indice d'hydroxyle entre 280 et 600 mg KOH/g et une fonctionnalité $\geq 2,8$ à $\leq 6,0$, la proportion des fonctions OH primaires dans le composant A) étant d'au moins 35 % (par rapport à toutes les fonctions OH terminales du composant A).

**5.** Procédé selon la revendication 1, **caractérisé en ce que** le composant A) réactif vis-à-vis des isocyanates est à raison d'au moins 60 % en poids constitué d'un polyétherpolyol.

**6.** Procédé selon la revendication 1, **caractérisé en ce que** la teneur en le composant E) ouvrant les cellules est de 0,1 à 1,0 % en poids.

**7.** Procédé selon la revendication 1, **caractérisé en ce que** le composé D1) catalytiquement actif est présent en une quantité $\geq 0,01$ à $< 2$ % en poids par rapport au poids total du composant A).

**8.** Procédé selon la revendication 1, dans lequel la teneur en le composant agent d'expansion C) est de 0,5 % en poids à 15 % en poids par rapport au poids total de R).

**9.** Matériau alvéolaire rigide en PUR/PIR à cellules ouvertes, qui peut être obtenu par le procédé selon l'une des revendications 1 à 8.

**10.** Réfrigérateur, congélateur ou combinaison réfrigérateur-congélateur, contenant un matériau alvéolaire rigide en PUR/PIR selon la revendication 9.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 905159 A
- EP 905158 A
- WO 200198389 A1
- WO 2011054868 A
- WO 2011054873 A
- WO 2015109488 A
- EP 2910585 A
- EP 1359177 A
- WO 2010043624 A
- EP 1923417 A

**In der Beschreibung aufgeführte Nicht-Patentliteratur**

- Oligo-Polyols for Elastic Polyurethanes. **IONESCU.** Chemistry and Technology of Polyols for Polyurethanes. Rapra Technology Limited, 2005, 55
- Polyester Polyols for Elastic Polyurethanes. **IONESCU.** CHEMISTRY AND TECHNOLOGY OF POLYOLS FOR POLYURETHANES. Rapra Technology Limited, 2005, 263
- Polyether Polyols for Rigid Polyurethane Foams. **IONESCU.** CHEMISTRY AND TECHNOLOGY OF POLYOLS FOR POLYURETHANES. Rapra Technology Limited, 2005, 321
- Polyester Polyols for Rigid Polyurethane Foams. **IONESCU.** CHEMISTRY AND TECHNOLOGY OF POLYOLS FOR POLYURETHANES. Rapra Technology Limited, 2005, 419
- Polyurethane. Kunststoff-Handbuch. Carl Hanser Verlag, 1993, vol. 7, 104-127